Europäisches Patentamt

European Patent Office

Office européen des brevets

(11) Veröffentlichungsnummer: **0 369 178**
**A2**

## (12) EUROPÄISCHE PATENTANMELDUNG

(21) Anmeldenummer: 89119309.6

(22) Anmeldetag: 18.10.89

(51) Int. Cl.5: **B60K 31/02, B60K 28/16**

(30) Priorität: 17.11.88 DE 3838915

(43) Veröffentlichungstag der Anmeldung:
23.05.90 Patentblatt 90/21

(84) Benannte Vertragsstaaten:
**DE FR GB IT SE**

(71) Anmelder: **ROBERT BOSCH GMBH**
**Postfach 10 60 50**
**D-7000 Stuttgart 10(DE)**

(72) Erfinder: **Wilde, Werner**
**Im Wolfsgaigen 30**
**D-7141 Schwieberdingen(DE)**

(54) **Vorrichtung zum Beeinflussen der Stellung eines Steuerorganes einer Brennkraftmaschine.**

(57) Vorrichtung zum Beeinflussen der Stellung eines, die Leistung einer Brennkraftmaschine bestimmenden, über eine Übertragungseinrichtung (6,106) mit einem Bedienelement verbundenen Steuerorganes (7,107). Bei einer solchen Vorrichtung ist ein Stellmotor (21,126) über ein Getriebe (22,127) mit einem, mit dem Steuerorgan (7,107) verbundenen ersten Drehglied (9,109) in Wirkverbindung bringbar und das erste Drehglied (9,109) ist gegenüber einem, koaxialen, mit dem Bedienelement (3,103) verbundenen, zweiten Drehglied (8,108) verdrehbar gelagert, wobei die beiden Drehglieder (9,8 bzw. 109,108) mittels einer Feder (16,116) in gegenseitiger Anlage an, einander gegenseitig zugeordneten Anschlägen (14,15,114, 115) vorgespannt sind. Um den Eingriff mit dem Stellmotor auf den geregelten Betriebszustand zu beschränken wird vorgeschlagen, daß das Getriebe (22,127) zumindest ein, mit dem Stellmotor (21,126) in Wirkverbindung befindliches Treibrad (20,124,125) besitzt, welches aus einer Ruhestellung, in der die Wirkverbindung zum ersten Drehglied (9,109) unterbrochen ist, in eine Arbeitsstellung, in der die Wirkverbindung zum ersten Drehglied (9,109) hergestellt ist, verlagert werden kann.

FIG.1

## Vorrichtung zum Beeinflussen der Stellung eines Steuerorganes einer Brennkraftmaschine.

Die Erfindung betrifft eine Vorrichtung zum Beeinflussen der Stellung eines, die Leistung einer Brennkraftmaschine bestimmenden, über eine Übertragungseinrichtung mit einem Bedienelement verbundenen Steuerorganes.

Solche Vorrichtungen sind bei verschiedenen Regelungen von Brennkraftmaschinen für den Eingriff in die von einem Bedienelement, z.B. einem Gaspedal, zu einem Steuerorgan, z.B. zur Drosselklappe eines Vergasers oder zum Stellhebel einer Einspritzpumpe, führende Übertragungseinrichtung erforderlich, um die Stellung des Steuerorganes in Abhängigkeit von verschiedenen Parametern beeinflussen zu können. Solche Beeinflussungen dienen beispielsweise der Vermeidung von Schlupf zwischen den Antriebsrädern eines Kraftfahrzeuges und der Fahrbahnoberfläche, sei es beim Beschleunigen durch eine zu hohe Antriebsleistung, die zu einem sogenannten Antriebsschlupf führt, sei es beim Abbremsen durch ein zu hohes Motorbremsmoment, das zu einem sogenannten Bremschlupf führt. Weiters kann eine solche Beeinflussung der Stellung des Steuerorganes zu einer, von der Stellung des Gaspedales unabhängigen Begrenzung der Höchstgeschwindigkeit eines Kraftfahrzeuges oder der von der Stellung des Gaspedales unabhängigen Einhaltung einer konstanten Fahrgeschwindigkeit eines Kraftfahrzeuges dienen. Bei einer Begrenzung der Fahrzeughöchstgeschwindigkeit, wird die Stellung des Steuerorganes bei Erreichen der gewünschten Höchstgeschwindigkeit in Richtung Leistungsverminderung der Brennkraftmaschine beeinflußt. Bei der Regelung einer konstanten Fahrgeschwindigkeit des Kraftfahrzeuges wird die Stellung des Steuerorganes, je nachdem, ob die tatsächliche, z.B. über Radsensoren ermittelte Fahrgeschwindigkeit über oder unter der gewünschten konstanten Fahrgeschwindigkeit liegt, in Richtung Leistungsverminderung oder Leistungssteigerung der Brennkraftmaschine beeinflußt.

Bei solchen Vorrichtungen sind zwei Betriebszustände zu unterscheiden. Zum ersten der ungeregelte Betriebszustand, bei dem die Stellung des Steuerorganes unbeeinflußt direkt vom Bedienelement gesteuert wird, und zum zweiten der geregelte Betriebszustand, bei dem die Stellung des Steuerorganes, bei einer bestimmten vorgegebenen Stellung des Bedienelementes, mittels eines Stellmotors gegenüber der, der Stellung des Bedienelementes entsprechenden Stellung des Steuerorganes verändert wird.

Bei einer bekannten Vorrichtung zum Beeinflussen der Stellung eines, die Leistung einer Brennkraftmaschine bestimmenden, über eine Übertragungseinrichtung mit einem Bedienelement verbundenen Steuerorganes ist der Stellmotor über ein Getriebe mit einem, mit dem Steuerorgan verbundenen ersten Drehglied in Wirkverbindung bringbar, welches gegenüber einem, koaxialen, mit dem Bedienelement verbundenen, zweiten Drehglied verdrehbar gelagert ist, wobei die beiden Drehglieder mittels einer Feder in gegenseitiger Anlage an, einander gegenseitig zugeordneten Anschlägen vorgespannt sind.

Bei dieser bekannten Vorrichtung ist das Getriebe über einen Freilauf mit dem ersten Drehglied gekoppelt, sodaß das Steuerorgan bei Entlastung des Bedienelementes von einer, in der Übertragungseinrichtung vorgesehenen Rückstellfeder rückgestellt werden kann, ohne das Getriebe und den Rotor des Stellmotors mitzudrehen. Nachteilig dabei ist es, daß der Freilauf ein Verstellen der Vorrichtung nur in einer Drehrichtung ermöglicht und daß die Rückstellfeder zur Überwindung der im Freilauf unvermeidlichen Restreibung ziemlich stark ausgeführt werden muß. Da bei jeder Belastung des Bedienelementes das Getriebe und der Rotor des Stellmotors über den Freilauf mitgedreht werden, muß auch die, die beiden Drehglieder im ungeregelten, d.h. vom Stellmotor unbeeinflußten Betriebszustand in gegenseitiger Anlage haltende Feder deutlich verstärkt ausgeführt werden, um ein Auseinanderdrehen der beiden Drehglieder im ungeregelten Betriebszustand zu verhindern.

Aufgabe der Erfindung ist es, eine Vorrichtung anzugeben, bei der der Rotor des Stellmotors im, vom Stellmotor unbeeinflußten Betriebszustand der Vorrichtung nicht mitbewegt wird. Diese Aufgabe wird erfindungsgemäß dadurch gelöst, daß das Getriebe zumindest ein, mit dem Stellmotor in Wirkverbindung befindliches Treibrad besitzt, welches aus einer Ruhestellung, in der die Wirkverbindung zum ersten Drehglied unterbrochen ist, in eine Arbeitsstellung, in der die Wirkverbindung zum ersten Drehglied hergestellt ist, verlagert werden kann. Durch diese Ausbildung wird die Wirkverbindung zwischen Stellmotor und erstem Drehglied auf den vom Stellmotor beeinflußten Betriebszustand der Vorrichtung beschränkt.

Um das Steuerorgan in einfacher Weise sowohl in Richtung höherer Leistung als auch in Richtung geringerer Leistung der Brennkraftmaschine über den Stellmotor beeinflussen zu können, kann in Ausgestaltung der Erfindung vorgesehen sein, daß das Getriebe für jede Drehrichtung des ersten Drehgliedes ein eigenes, jeweils aus einer Ruhestellung in eine Arbeitsstellung verlagerbares Treibrad besitzt.

Die zur Herstellung der Wirkverbindung mit dem ersten Drehglied erforderliche Verlagerung des jeweiligen Treibrades kann durch eine elektrisch betätigbare Einrichtung erfolgen. Erfindungsgemäß wird bevorzugt, daß das jeweilige Treibrad durch das Anfahren des Stellmotors aus der Ruhestellung in die Arbeitsstellung verlagerbar ist.

Gemäß einer Weiterbildung der Erfindung kann vorgesehen sein, daß das Treibrad auf einer, um die Drehachse des, das Treibrad antreibenden Ritzels drehbaren Wippe gelagert ist.

Zur einfacheren Beeinflussung des Steuerorganes in beide Richtungen wird erfindungsgemäß vorgeschlagen, daß beide Treibräder auf derselben Wippe gelagert sind und mit demselben Ritzel kämmen.

Für die Rückkehr des Treibrades in seine Ruhestellung kann die Wippe erfindungsgemäß mittels einer Feder in eine Ruhestellung vorgespannt sein, in der die Wirkverbindung des jeweiligen Treibrades zum ersten Drehglied unterbrochen ist. Weiters kann erfindungsgemäß vorgesehen sein, daß die Wippe durch zwei, entgegengesetzt wirkende Federn in eine Ruhestellung vorgespannt ist, in der die Wirkverbindung des jeweiligen Treibrades zum ersten Drehglied unterbrochen ist. Dies ist besonders bei zwei, auf einer Wippe gelagerten, jeweils einer anderen Drehrichtung zugeordneten Treibrädern von Vorteil.

In weiterer Ausgestaltung der Erfindung kann die Wippe über eine Rutschkupplung mit dem das Treibrad antreibenden Ritzel in Wirkverbindung stehen.

Um den Bereich, in dem die Beeinflussung durch den Stellmotor möglich ist, einstellen bzw. verstellen zu können, wird erfindungsgemäß vorgeschlagen, daß ein, durch die Verlagerung des Treibrades mit diesem in Wirkverbindung bringbares, zum ersten Drehglied koaxial verdrehbares, drittes Drehglied vorgesehen ist, welches mit einem, am ersten Drehglied angebrachten Mitnehmer in Eingriff bringbar ist.

Nachstehend wird die Erfindung an zwei Ausführungsbeispielen anhand der Zeichnungen näher erläutert. In den Zeichnungen:

Fig. 1 zeigt schematisch eine Übertragungseinrichtung, die ein, als Gaspedal ausgebildetes Bedienelement mit einem, als Drosselklappe einer Brennkraftmaschine ausgebildeten Steuerorgan verbindet und in der eine Ausführungsform einer erfindungsgemäßen Vorrichtung angeordnet ist, welche im geregeltem Betriebszustand z.B. eine Verringerung der Leistung der Brennkraftmaschine vorsieht;

Fig. 2 zeigt einen Schnitt durch das, mit dem Stellmotor gekoppelte Getriebe nach der Linie II-II in Fig. 1;

Fig. 3 zeigt schematisch eine Übertragungseinrichtung die ein, als Gaspedal ausgebildetes Bedienelement mit einem, als Drosselklappe einer Brennkraftmaschine ausgebildeten Steuerorgan verbindet und in der eine weitere Ausführungsform einer erfindungsgemäßen Vorrichtung angeordnet ist, welche im geregelten Betriebszustand, je nach der Drehrichtung des Stellmotors, eine Verringerung bzw. eine Erhöhung der Leistung der Brennkraftmaschine vorsieht, und

Fig. 4 zeigt einen Schnitt durch das, mit dem Stellmotor gekoppelte Getriebe nach der Linie IV-IV in Fig. 3.

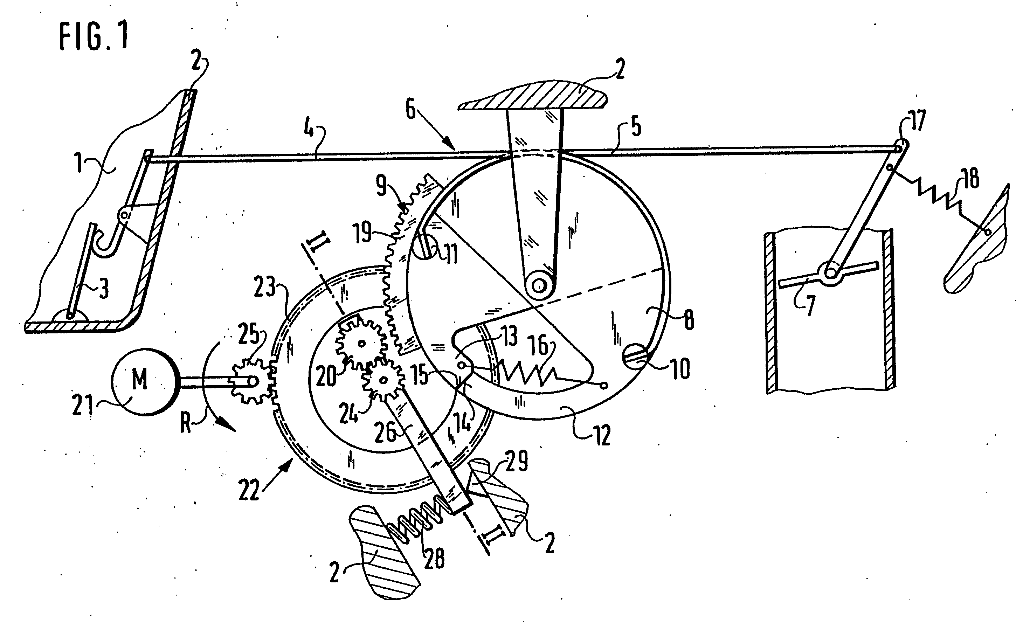

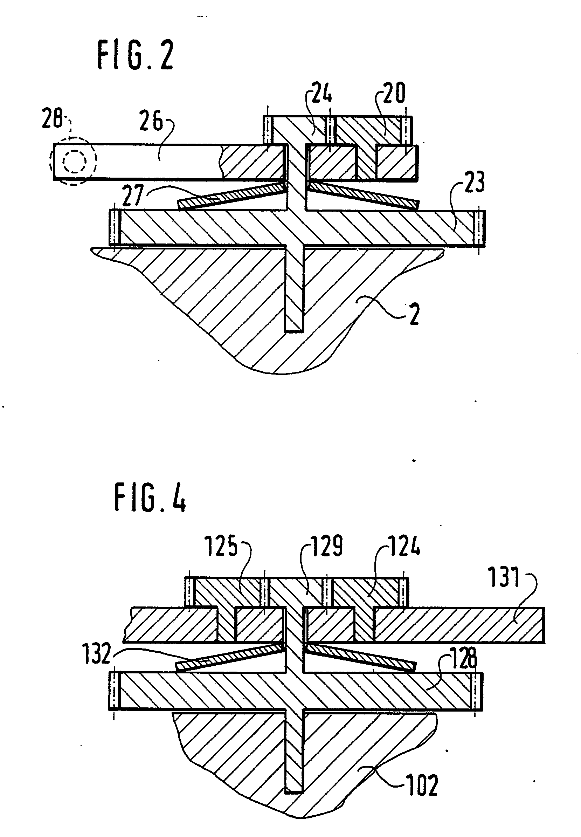

Bei dem in den Fig. 1 und 2 dargestellten Ausführungsbeispiel ist ein, in einem Fußraum 1 eines Kraftfahrzeuges 2 angeordnetes, als Gaspedal ausgebildetes Bedienelement 3 über eine, mit Seilzügen 4,5 ausgestattete Übertragungseinrichtung 6 mit einem, als Drosselklappe ausgebildeten Steuerorgan 7 verbunden, dessen Stellung die Leistung der, nicht näher dargestellten Brennkraftmaschine des Kraftfahrzeuges 2 bestimmt.

In die Übertragungseinrichtung 6 sind zwei, auf einer fahrzeugfesten Drehachse koaxial gelagerte, scheibenförmige Drehglieder 8,9 mit kreisförmigem Außenumfang eingeschaltet, an denen die Enden 10,11 der Seilzüge 4,5 befestigt sind. Der mit der Drosselklappe 7 verbundene, erste Seilzug 5 ist mit seinem Ende 11 am ersten Drehglied 9 befestigt und liegt an dessen kreisförmigem Außenumfang an. Der mit dem Gaspedal 3 verbundene, zweite Seilzug 4 ist mit seinem Ende 10 am zweiten Drehglied 8 befestigt und liegt an dessen kreisförmigem Außenumfang an. Die beiden Drehglieder 8,9 sind mit einander gegenseitig zugeordneten Fortsätzen 12,13 versehen, deren als Anschläge 14,15 ausgebildete Stirnseiten aneinander anliegen und mittels einer, an beiden Fortsätzen 12,13 angreifenden Feder 16 in Anlage gehalten werden. In der Übertragungseinrichtung 6 ist eine, an einem Drosselklappenstellhebel 17 angreifende Rückstellfeder 18 vorgesehen, die die Drosselklappe 7, bei entlasteten Gaspedal 3, schließt.

Das erste Drehglied 9 trägt an seinem Außenumfang ein Zahnradsegment 19, welches zum Beeinflussen der Drosselklappenstellung im geregelten Betriebszustand der Vorrichtung mit einem Treibrad 20 eines, von einem Stellmotor 21 antreibbaren Getriebes 22 in Wirkverbindung bringbar ist.

Das in Fig. 2 im Schnitt dargestellte, mit dem Stellmotor 21 gekoppelte Getriebe 22 besitzt zwei koaxiale, drehfest miteinander verbundene, im Abstand übereinander angeordnete Zahnräder 23,24, von denen das untere, größere Zahnrad 23 mit einem Antriebsritzel 25 des Stellmotors 21 im Eingriff steht, während das obere, kleinere Zahnrad 24 mit dem Treibrad 20 kämmt. Zwischen dem oberen Zahnrad 24 und dem unteren Zahnrad 23 ist eine, gegenüber diesen beiden Zahnrädern koaxial verdrehbare Wippe 26 vorgesehen, die mittels einer Tellerfeder 27 gegen die Unterseite des oberen Zahnrades 24 in Anlage gedrückt wird und in der das, mit dem oberen Zahnrad 24 kämmende Treibrad 20 frei drehbar gelagert ist. Die Wippe 26 ist seitlich aus dem Getriebe 22 herausgeführt und mittels einer Rückstellfeder 28 gegen einen, die Ruhelage der Wippe 26 bestimmenden, fahrzeugfesten Anschlag 29 gedrückt. Beim Anfahren des Stellmotors 21, mit der Drehrichtung des Antriebsritzels 25 in Richtung des Pfeiles R in Fig. 1, wird die Wippe 26 durch den Reibungskontakt mit dem oberen Zahnrad 24 mitgenommen, entgegen der Wirkung der Rückstellfeder 28 vom Anschlag 29 (in Fig. 1 im Uhrzeigersinn) weggedreht und solange verdreht bis das Treibrad 20 in den Eingriff mit dem Zahnradsegment 19 des ersten Drehgliedes 9 gekommen ist. Ab dann kommt es zum Durchrutschen der zwischen dem oberen Zahnrad 24 und der Wippe 26 bzw. der zwischen der Tellerfeder 27 und dem unteren Zahnrad 23 gebildeten Rutschkupplung. Während des Weiterlaufens des Stellmotors wird das erste Drehglied 9 verdreht und die Wippe 26 bleibt in ihrer Arbeitsstellung, wobei das auf die Wippe 26 wirkende Drehmoment, das durch die, zwischen dem oberen Zahnrad 24 und der Wippe 26 mit Hilfe der Tellerfeder 27 gebildete Rutschkupplung auf die Wippe 26 aufgebracht wird, größer ist, als das durch die Rückstellfeder 28 aufgebrachte Rückdrehmoment. Wird der Stellmotor 21 abgeschaltet, so fällt das Antriebsmoment weg und die Wippe 26 wird durch die Rückstellfeder 28 in ihre Ruhestellung zurückgedreht und die Wirkverbindung des Treibrades 20 zum ersten Drehglied 9 unterbrochen. Dies kann eventuell durch ein kurzzeitiges Umpolen des Stellmotors 21 unterstützt werden. Falls gewünscht, kann das Umpolen des Stellmotors 21 auch zum Zurückschwenken der Wippe 26 in die Ruhestellung verwendet wer den, weshalb die Rückstellfeder 28 dann auch entfallen kann.

Beim Ausführungsbeispiel der Fig. 1 und 2 kann das Steuerorgan 7 durch den Stellmotor 21 nur in Richtung Leistungsverminderung beeinflußt werden, wobei der Stellmotor 21 zuerst das Treibrad 20 mit dem Zahnradsegment 19 des ersten Drehgliedes 9 in Eingriff bringt und dann über das Treibrad 20 das erste Drehglied 9 aus seiner Anlage am zweiten Drehglied 8 entgegen der Wirkung der Feder 16 verdreht. Dadurch werden die beiden Anschläge 14 und 15 von einander getrennt, die Spannung der Feder 16 wird erhöht und die Drosselklappe 7 wird über den Seilzug 5 und die Rückstellfeder 18 gegenüber der, durch die Gaspedalstellung, bei aneinander anliegenden Drehgliedern 8,9 vorgegebenen, unbeeinflußten Stellung in Richtung Leistungsverminderung der Brennkraftmaschine entweder solange verstellt, bis der Stellmotor 21 abgeschaltet wird, oder durch den Stellmotor 21 um einen, von der, den Stellmotor 21 ansteuernden Regeleinrichtung bestimmten Drehwinkel verstellt. Dann wird die Wirkverbindung zwischen dem Treibrad 20 und dem ersten Drehglied 9 durch das Rückschwenken der Wippe 26 in ihre Ruhestellung unterbrochen und bei unverändert gebliebener Gaspedalstellung wird das erste Drehglied 9 durch die Feder 16 in seine Anlage gegen das zweite Drehglied 8 zurückgedreht und damit die Drosselklappe 7 in die, von ihr vor dem Regelvorgang eingenommene, unbeeinflußte Stellung zurückgedreht.

Da die Wirkverbindung vom Stellmotor 21 zum ersten Drehglied 9 nur solange aufrechterhalten wird, als das Antriebsmoment des Stellmotors 21 die Wippe 26 entgegen der Kraft ihrer Rückstellfeder 28 verdreht hält, wird der Stellmotor während des ungeregelten Betriebszustandes der Vorrichtung nicht mitgedreht.

Anstatt der, die Mitnahme der Wippe 26 bewirkenden Rutschkupplung kann auch ein anderer Mechanismus zum Verlagern des Treibrades 20 aus seiner Ruhestelung in die Arbeitsstellung vorgesehen sein. Beispielsweise kann die Wippe mittels an dem, aus dem Getriebe 22 herausgeführten Teil der Wippe 26 angreifenden Elektromagneten zwischen Ruhestellung und Arbeitsstellung verschwenkt werden.

Will man die, bei einer Vorrichtung gemäß Fig. 1 und 2 auf eine Drehrichtung beschränkte Beeinflussungsmöglichkeit zur Leistungssteigerung verwenden, - z.B. um bei entlastetem Gaspedal eine konstante vorgegebene Fahrgeschwindigkeit in Abhängigkeit von Radsensorsignalen zu steuern - so braucht man die Wippe 26 samt Anschlag 29 und Rückstellfeder 28 nur gegenüber der Darstellung in Fig. 1 um 180° gedreht anzuordnen, die beiden Drehglieder 8 und 9 im Gegenuhrzeigersinn um etwa 60° gedreht anzuordnen und den Drehsinn des Stellmotors 21 umzukehren.

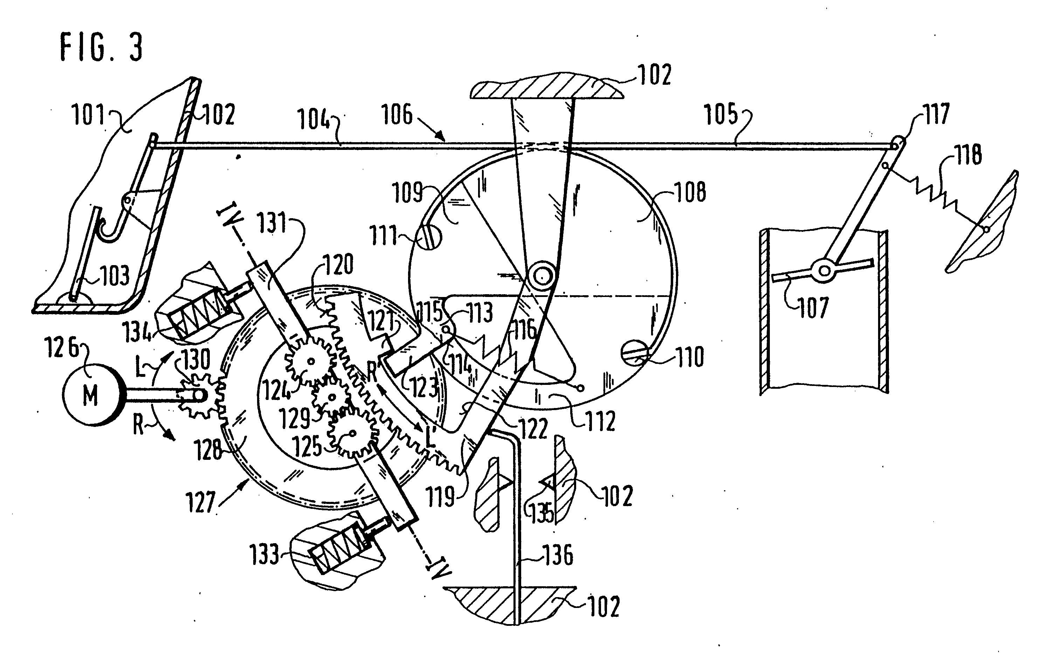

Bei dem in den Fig. 3 und 4 dargestellten Ausführungsbeispiel ist ein, in einem Fußraum 101 eines Kraftfahrzeuges 102 angeordnetes, als Gaspedal ausgebildetes Bedienelement 103 über eine, mit Seilzügen 104, 105 ausgestattete Übertragungseinrichtung 106 mit einem als Drosselklappe ausgebildeten Steuerorgan 107 verbunden, dessen Stellung die Leistung der, nicht näher dargestellten Brennkraftmaschine des Kraftfahrzeuges 102 bestimmt.

In die Übertragungseinrichtung 106 sind zwei, auf einer fahrzeugfesten Drehachse koaxial gelagerte, scheibenförmige Drehglieder 108,109 mit kreisförmigem Außenumfang eingeschaltet, an denen die Enden 110,111 der Seilzüge 104,105 befestigt sind. Der mit der Drosselklappe 107 verbundene erste Seilzug 105 ist mit seinem Ende 111 am ersten Drehglied 109 befestigt und liegt an dessen kreisförmigen Außenumfang an. Der mit dem Gaspedal 103 verbundene zweite Seilzug 104 ist mit seinem Ende 110 am zweiten Drehglied 108 befestigt und liegt an dessen kreisförmigen Außenumfang an. Die beiden Drehglieder 108,109 sind mit einander gegenseitig zugeordneten Fortsätzen 112,113 versehen, deren als Anschläge 114,115 ausgebildete Stirnseiten aneinander anliegen und mittels einer, an beiden Fortsätzen 112,113 angreifenden Feder 116 in Anlage gehalten werden. In der Übertragungseinrichtung 106 ist eine, an einem Drosselklappenhebel 117 angreifende Rückstellfeder 118 vorgesehen, die die Drosselklappe 107 bei entlastetem Gaspedal 103 schließt.

Koaxial zu den beiden Drehglieder 108,109 ist ein drittes Drehglied 119 vorgesehen, welches an seinem Außenumfang ein Zahnsegment 120 trägt, an dessen zur Drehachse weisender Innenseite eine, von seitlichen Anschlägen 121,122 begrenzte Aussparung für den Eingriff mit einem, am ersten Drehglied 109 angebrachten Mitnehmer 123 vorgesehen ist.

Das Zahnsegment 120 des dritten Drehgliedes 119 ist für den Eingriff mit einem von zwei, entgegengesetzt zueinander drehbaren Treibrädern 124,125 eines mit einem Stellmotor 126 gekoppelten Getriebes 127 vorgesehen. Das in Fig. 4 im Schnitt dargestellte Getriebe 127 besitzt zwei koaxiale, drehfest miteinander verbundene, im Abstand übereinander angeordnete Zahnräder 128,129, von denen das untere, größere Zahnrad 128 mit einem Antriebsritzel 130 des Stellmotors 126 in Eingriff steht, während das obere, kleinere Zahnrad 129 mit den Treibrädern 124,125 kämmt. Zwischen dem oberen Zahnrad 129 und dem unteren Zahnrad 128 ist eine, gegenüber diesen beiden Zahnrädern koaxial verdrehbare Wippe 131 vorgesehen, die mittels einer Tellerfeder 132 gegen die Unterseite des oberen Zahnrades 129 in Anlage gedrückt wird und in der die, mit dem oberen Zahnrad 129 kämmenden Treibräder 124,125 auf einander entgegengesetzten Seiten des oberen Zahnrades 129 frei drehbar gelagert sind. Die Wippe 131 ist seitlich aus dem Getriebe 127 herausgeführt und mittels zweier, auf einander entgegengesetzten Enden der Wippe 131 angreifenden Druckfedern 133,134 in einer Ruhelage gehalten, in der die beiden, auf der Wippe 131 gelagerten Treibräder 124,125 sich im Abstand zum Zahnsegment 120 des dritten Drehgliedes 119 befinden. In der Ruhelage liegt jedes Ende der Wippe 131 an der diesem Ende zugeordneten, in eine Endlage vorgespannten Druckfeder 133 bzw. 134 an. Da die beiden Druckfedern 133,134 auf die Wippe 131 einander bezüglich der Drehachse der Wippe 131 entgegengesetzte Drehmomente ausüben, wird die Wippe im ungeregelten Betriebszustand der Vorrichtung in der in Fig. 3 dargestellten Ruhestellung gehalten.

Beim Anfahren des Stellmotors 126 mit der Drehrichtung des Antriebsritzels 130 in Richtung des Pfeiles R in Fig. 3, zur Leistungsverminderung der Brennkraftmaschine, wird die Wippe 131 durch den Reibungskontakt mit dem oberen Zahnrad 129, im Uhrzeigersinn in Fig. 3, entgegen der Wirkung der Feder 133 mitgenommen und solange verdreht bis das Treibrad 124 in den Eingriff mit dem Zahnsegment 120 des dritten Drehgliedes 119 gekommen ist. Ab dann rutscht die, zwischen dem oberen Zahnrad 129 und der Wippe 131 bzw. die zwischen der Tellerfeder 132 und dem unteren Zahnrad 128 gebildete Rutschkupplung durch. Während des Weiterlaufens des Stellmotors mit der Drehrichtung des Antriebsritzels 130 in Richtung des Pfeiles R, wird das dritte Drehglied 110 verdreht und die Wippe 131 bleibt in ihrer Arbeitsstellung, wobei das auf die Wippe 131 wirkende Drehmoment, das durch die, zwischen dem oberen Zahnrad 129 und der Wippe 131 mit Hilfe der Tellerfeder 132 gebildete Rutschkupplung auf die Wippe 131 aufgebracht wird, größer ist, als das durch die Rückstellfeder 133 aufgebrachte Rückdrehmoment. Wird der Stellmotor 126 abgeschaltet, so fällt das Antriebsmoment weg und die Wippe 131 wird durch die Rückstellfeder 133 in ihre Ruhestellung zurückgedreht und die Wirkverbindung des Treibrades 124 zum dritten Drehglied 119 unterbrochen.

Beim Anfahren des Stellmotors 126, mit der Drehrichtung des Antriebsritzels 130 in Richtung des Pfeiles L in Fig. 3, zur Leistungssteigerung der Brennkraftmaschine, wird die Wippe 131 durch die Rutschkupplung im entgegengesetzten Uhrzeigersinn in Fig. 3 solange verdreht, bis das Treibrad 125 in Eingriff mit dem Zahnsegment 120 des dritten Drehgliedes 119 kommt, wobei das von der Rutschkupplung auf die Wippe 131 übertragene Drehmoment größer ist, als das durch die Druckfeder 134 aufgebrachte Rückstellmoment. Beim Abschalten des Stellmotors 126 fällt das Antriebsmoment des Stellmotors 126 weg und die Wippe 131 wird durch die Druckfeder 134 wieder in die Ruhestellung zurückgedreht und die Wirkverbindung des Treibrades 125 zum dritten Drehglied 119 unterbrochen.

Bei dem Ausführungsbeispiel der Vorrichtung gemäß den Fig. 3 und 4 wird die Stellung der Drosselklappe 107, je nach der Drehrichtung des Stellmotors 126, mit der Drehrichtung des Antriebsritzels 130 in Richtung des Pfeiles R bzw. L in Richtung Leistungsverminderung oder in Richtung Leistungssteigerung beeinflußt, wobei immer zuerst das dritte Drehglied 119 gegenüber dem ersten Drehglied 109 verdreht wird, bis der Mitnehmer 123 des ersten Drehgliedes 109 entweder am Anschlag 121 oder am Anschlag 122 anliegt, und dann erst die Beeinflussung wirksam wird, wenn das dritte Drehglied 119 und das erste Drehglied 109 bzw. alle drei Drehglieder 108,109, 119 gemeinsam verdreht werden. Der Abstand der beiden Anschläge 121,122 voneinander bzw, die Größe der, von diesen begrenzten Aussparung erlaubt es, die Drosselklappe 107 im ungeregelten Betriebszustand der Vorrichtung mittels des Gaspedales 103 weiter zu öffnen als im geregelten Betriebszustand mittels des Stellmotors 126.

Zur mechanischen Begrenzung des geregelten Betriebszustandes der Vorrichtung auf einen bestimmten Leistungsbereich der Brennkraftmaschine kann die Verdrehung des dritten Drehgliedes 119 in eine oder in beide Drehrichtungen durch fahrzeugfeste Endanschläge für das dritte Drehglied begrenzt sein. Im dargestellten Ausführungsbeispiel wird der geregelte Betriebszustand bei einer Beeinflussung in Richtung Leistungssteigerung (Pfeil L) durch einen Endanschlag 135 begrenzt, gegen den eine, das dritte Drehglied 119 in Richtung des Pfeiles L' beaufschlagende Feder 136 zur Anlage kommt, wenn das Ende des, für die Leistungssteigerung vorgesehenen Bereiches bei der Verdrehung des ersten Drehgliedes 109 erreicht wird, um dann ein weiteres Drehen des ersten Drehgliedes 109 in Richtung Leistungssteigerung zu verhindern. Durch die Feder 136 wird der Leerweg zwischen Anschlag 122 und Mitnehmer 123 zu Beginn der Regelung in Richtung Leistungsminderung vermindert, um eine rasche Reaktion zu Beginn der Regelung z.B. bei einem Antriebsschlupf zu erreichen.

Bei der Beeinflussung in Richtung Leistungssteigerung bleiben, nachdem das dritte Drehglied 119 mit seinem Anschlag 121 am Mitnehmer 123 des ersten Drehgliedes 109 zur Anlage gekommen ist, alle drei Drehglieder 108,109,119 jeweils in Anlage an ihren, jeweils einander gegenseitig zugeordneten Anschlägen (114 mit 115 bzw. 121 mit 123) und werden gemeinsam vom Stellmotor 126 verdreht, wodurch die Drosselklappe 107 über den Seilzug 105 gegenüber der, durch die Gaspedalstellung vorgegebenen, unbeeinflußten Stellung in Richtung Leistungssteigerung der Brennkraftmaschine entweder solange verstellt wird, bis der Stellmotor 126 abgeschaltet wird, oder durch den Stellmotor 126 um einen, von der, den Stellmotor 126 ansteuernden Regeleinrichtung bestimmten Drehwinkel verstellt. Dann wird die Wirkverbindung zwischen dem Treibrad 125 und dem dritten Drehglied 119 durch das, durch die Kraft der Feder 134 bewirkte Rückschwenken der Wippe 131 in ihre Ruhestellung unterbrochen und das erste Drehglied 109 und das dritte Drehglied 119 werden, durch die Rückstellfeder 118 und den Seilzug 105, in die der Gaspedalstellung entsprechende Stellung zurückgezogen.

Bei der Beeinflussung in Richtung Leistungsverminderung wird, nachdem das dritte Drehglied 119 mit seinem Anschlag 122 am Mitnehmer 123 des ersten Drehgliedes 109 zur Anlage gekommen ist, das erste Drehglied 109 entgegen der Wirkung der Feder 116 aus seiner Anlage am zweiten Drehglied 108 verdreht. Dadurch werden die beiden Anschläge 114 und 115 voneinander getrennt, die Spannung der Feder 116 erhöht und die Drosselklappe 107 wird über den Seilzug 105 und die Rückstellfeder 118 gegenüber der, durch die Gaspedalstellung bei aneinander anliegenden Drehgliedern 108,109 vorgegebenen, unbeeinflußten Stellung in Richtung Leistungsverminderung der Brennkraftmaschine solange verstellt, bis der Stellmotor 126 abgeschaltet wird. Dann wird die Wirkverbindung zwischen dem Treibrad 124 und dem dritten Drehglied 119 durch das Rückschwenken der Wippe 131 in ihre Ruhestellung unterbrochen und das erste Drehglied 109 wird, bei unverändert gebliebener Gaspedalstellung, durch die Feder 116 in seine Anlage gegen das zweite Drehglied 108 zurückgedreht und damit die Drosselklappe 107 in die von ihr, vor dem Regelvorgang eingenommene, unbeeinflußte Stellung zurückgedreht.

Da die Wirkverbindung vom Stellmotor 126 zum dritten Drehglied 119 nur solange aufrechrerhalten wird, als das Antriebsmoment des Stellmotors 120 die Wippe 131 entgegen der Kraft der Feder 133 oder entgegen der Kraft der Feder 134 in die eine oder in die andere Richtung verdreht hält, wird der Stellmotor 126 während des ungeregelten Betriebes der Vorrichtung nicht mitgedreht.

Anstatt der, die Mitnahme der Wippe 131 bewirkenden Rutschkupplung kann auch ein anderer Mechanismus zum Verlagern der Treibräder 124 und 125 aus der Ruhestellung in die Arbeitsstellung vorgesehen sein. Beispielsweise könnte die Wippe 131 auch mit Hilfe von Elektromagneten, die an den aus dem Getriebe 127 herausgeführten Teilen der Wippe angreifen, zwischen der Ruhestellung und der Arbeitsstellung hin- und her geschwenkt werden.

Bei einem weiteren, nicht dargestellten Ausführungsbeispiel der erfindungsgemäßen Vorrichtung ist keine mechanische Begrenzung des geregelten Betriebszustandes vorgesehen, weshalb das Zahnsegment des dritten Drehgliedes vom Ausführungsbeispiel der Fig. 3 und 4 direkt am ersten Drehglied befestigt ist und das dritte Drehglied entfällt. Sonst stimmt dieses Ausführungsbeispiel mit jenem der Fig. 3 und 4 überein.

In den, in den Zeichnungen dargestellten Ausführungsbeispielen sind die jeweils angegebenen Richtungen für die Verstellung des Steuerorganes in Richtung Leistungssteigerung bzw. Leistungsminderung der Brennkraftmaschine nur beispielhaft angegeben.

## Ansprüche

1. Vorrichtung zum Beeinflussen der Stellung eines, die Leistung einer Brennkraftmaschine bestimmenden, über eine Übertragungseinrichtung (6,106) mit einem Bedienelement (3,103) verbundenen Steuerorganes (7,107), bei welcher ein Stellmotor (21,126) über ein Getriebe (22,127) mit einem, mit dem Steuerorgan (7,107) verbundenen ersten Drehglied (9,109) in Wirkverbindung bringbar ist, welches gegenüber einem, koaxialen, mit dem Bedienelement (3,103) verbundenen, zweiten Drehglied (8,108) verdrehbar gelagert ist, wobei die beiden Drehglieder (9,8 bzw. 109,108) mittels einer Feder (16,116) in gegenseitiger Anlage an, einander gegenseitig zugeordneten Anschlägen (14,15,114,115) vorgespannt sind, dadurch gekennzeichnet, daß das Getriebe (22,127) zumindest ein, mit dem Stellmotor (21,126) in Wirkverbindung befindliches Treibrad (20,124,125) besitzt, welches aus einer Ruhestellung, in der die Wirkverbindung zum ersten Drehglied (9,109) unterbrochen ist, in eine Arbeitsstellung, in der die Wirkverbindung zum ersten Drehglied (9,109) hergestellt ist, verlagert werden kann.

2. Vorrichtung nach Anspruch 1, dadurch gekennzeichnet, daß das Getriebe (127) für jede Drehrichtung des ersten Drehgliedes (109) ein eigenes, jeweils aus einer Ruhestellung in eine Arbeitsstellung verlagerbares Treibrad (124,125) besitzt.

3. Vorrichtung nach Anspruch 1 oder 2, dadurch gekennzeichnet, daß das jeweilige Treibrad (20,124,125) durch das Anfahren des Stellmotors (21,126) aus der Ruhestellung in die Arbeitsstellung verlagerbar ist.

4. Vorrichtung nach einem der Ansprüche 1-3, dadurch gekennzeichnet, daß das Treibrad (20,124,125) auf einer, um die Drehachse eines, das Treibrad (20,124,125) antreibenden Ritzels (24,129) drehbaren Wippe (26,131) gelagert ist.

5. Vorrichtung nach Anspruch 4, dadurch gekennzeichnet, daß beide Treibräder (124,125) auf derselben Wippe (131) gelagert sind und mit demselben Ritzel (129) kämmen.

6. Vorrichtung nach einem der Ansprüche 4 oder 5, dadurch gekennzeichnet, daß die Wippe (26) mittels einer Feder (28) in eine Ruhestellung vorgespannt ist, in der die Wirkverbindung des jeweiligen Treibrades (20) zum ersten Drehglied (9) unterbrochen ist.

7. Vorrichtung nach einem der Ansprüche 4 oder 5, dadurch gekennzeichnet, daß die Wippe (131) durch zwei, entgegengesetzt wirkende Federn (133,134) in eine Ruhestellung vorgespannt ist, in der die Wirkverbindung des jeweiligen Treibrades (124,125) zum ersten Drehglied (109) unterbrochen ist.

8. Vorrichtung nach einem der Ansprüche 4-7, dadurch gekennzeichnet, daß die Wippe (26,131) über eine Rutschkupplung mit dem, das Treibrad (20,124,125) antreibenden Ritzel (24,129) in Wirkverbindung steht.

9. Vorrichtung nach einem der Ansprüche 2-7, dadurch gekennzeichnet, daß ein, durch die Verlagerung des Treibrades (124,125) mit diesem in Wirkverbindung bringbares, zum ersten Drehglied (109) koaxial verdrehbares, drittes Drehglied (119) vorgesehen ist, welches mit einem, am ersten Drehglied (109) angebrachten Mitnehmer (123) in Eingriff bringbar ist.

FIG.1

EP 0 369 178 A2

FIG. 2

FIG. 4

FIG. 3

EP 0 369 178 A2